# EUROPEAN PATENT SPECIFICATION

(11) **EP 4 580 894 B1**
(45) Date of publication and mention of the grant of the patent: **20.05.2026**
(21) Application number: 23742451.0
(22) Date of filing: 11.07.2023
(51) Int. Cl.: F16C 17/02, B60G 7/00, F16C 11/04

(54) **CONNECTION UNIT FOR MUTUALLY CONNECTING TWO MOTOR-VEHICLE SUSPENSION COMPONENTS**
VERBINDUNGSEINHEIT ZUM GEGENSEITIGEN VERBINDEN ZWEIER FAHRWERKSTEILE EINES KRAFTFAHRZEUGS
UNITÉ DE LIAISON POUR RELIER MUTUELLEMENT DEUX COMPOSANTS DE SUSPENSION DE VÉHICULE À MOTEUR

(30) Priority: 29.08.2022 IT 202200017694
(43) Date of publication of application: 09.07.2025
(73) Proprietor: Stellantis Europe S.p.A., 10135 Torino (TO) (IT)
(72) Inventor: MESSINA, Alessandro, 10135 Torino (IT); BRUNO, Daniele, 41121 MODENA (IT)
(74) Representative: Buzzi, Notaro & Antonielli d'Oulx S.p.A.
(86) International application number: PCT/IB2023/057097
(87) International publication number: WO 2024/047414

(56) References cited:
- DE-A1- 102013 213 075
- US-A1- 2020 094 639

## Description

### Field of the invention

The present invention relates to motor-vehicle wheel suspensions and in particular relates to a motor-vehicle suspension comprising two suspension components mutually pivotally connected by means of a connection unit, wherein one of said two components has a fork-shaped portion comprising two parallel tines, and the other of said two components has an end portion interposed between the two tines and connected to the tines through said connection unit, wherein said end portion interposed between the two tines comprises an element having a through hole oriented transversely to the main axis of said tines, wherein said connection unit comprises a connection screw having a head portion inserted and fixed through a first hole obtained on one of the two tines, a central portion inserted and fixed within the through hole of the element, and an end portion inserted and fixed within a second hole obtained on the other of said two tines.

### Prior art

According to the conventional technique, the connection unit further comprises a nut screw arranged in contact with one of the two tines on the opposite side with respect to the head portion of the connection screw. Consequently, through the screw - nut screw coupling by means of an assembly tool and by applying the correct tightening torque, the two suspension components are mutually pivotally connected, in particular the fork-shaped portion is connected with the end portion of the other component.

This solution is particularly critical in the case of particularly massive fork-shaped portions made of aluminium, for example, and more generally with materials and/or tine sections which have low elongation and high stiffness properties (for example magnesium or carbon). In fact, said fastening operations generate a pre-stressing which acts on the suspension components to be connected, in particular on the fork. The fork-shaped force of the screw must overcome the opposition of the fork which tends to return elastically to its rest position.

Just in case the fork-shaped portion is made of aluminum (or other materials with low elongation and high stiffness), it can present states of residual stress which can affect the reliability of the component during the life cycle of the motor-vehicle.

US 2020/094639 A1 discloses a known motor-vehicle suspension as in the preamble of claim 1.

Therefore, there is a need to propose an improvement solution that can overcome said drawbacks.

### Object of the invention

The main object of the present invention is to overcome the drawbacks of the known solutions.

In particular, an object of the present invention is to provide a motor-vehicle suspension and a related connection unit which is extremely reliable in withstanding the stresses to which the components are subjected during the life cycle of the motor-vehicle.

A further object of the present invention is to provide a connection unit which makes it possible not to effectively introduce the stresses deriving from the assembly operations to connect the two suspension components together.

A further object of the invention is to provide a solution with a relatively simple structure that is cheap to produce.

A further object is to provide a solution which is easily adaptable to be implemented with different motor-vehicle components to be connected, and on different motor-vehicle classes, regardless of the used materials and related stiffness and elongation properties.

A further object is to provide a solution which allows the connection unit to be tightened while limiting its bulk with respect to the conventional solution, and consequently to reduce the complexity of maneuvering the tools adapted to lock the fastening.

### Summary of the invention

These objects are achieved through a motor-vehicle suspension comprising two suspension components mutually pivotally connected by means of a connection unit, wherein one of said two components has a fork-shaped portion comprising two parallel tines, and the other of said two components has an end portion interposed between the two tines and connected to the tines through said connection unit, wherein said end portion interposed between the two tines comprises an element having a through hole, wherein said connection unit comprises a connection screw having a head portion inserted and fixed through a first hole obtained on one of the two tines, a central portion inserted and fixed within the through hole of the element, and an end portion inserted and fixed within a second hole obtained on the other of said two tines,
said motor-vehicle suspension being characterized in that:
- said connection unit comprises a bushing-shaped spacer member engaged by interference within said second hole, wherein said spacer member comprises a through threaded hole receiving said end portion of the connection screw,
- said connection unit further comprises an anti-rotation flange configured to prevent rotation of said spacer member about its own axis, during fastening of the connection screw.

Further advantageous features of the invention are defined in the attached claims and in the following description.

### Brief description of the figures

Further features and advantages of the invention will appear from the following description with reference to the attached drawings, provided purely by way of non-limiting example, wherein:
- figure 1 illustrates a perspective view of two motor-vehicle suspension components mutually connected by means of a connection unit, according to an embodiment,
- figure 2 is an enlarged-scale view of the connection zone of the two suspension components illustrated in the previous figure,
- figure 3 is an enlarged-scale cross-sectional view showing the connection zone of the two suspension components and the connection unit, in a stage of assembly prior to the final configuration, and
- figure 4 is a cross-sectional view showing the same components of the previous figure, in the final assembled configuration.

### Detailed description of multiple embodiments

Various specific details are illustrated in the following description aimed at an in-depth understanding of examples of one or more embodiments. Embodiments may be made without one or more of the specific details, or with other methods, components, materials, etc. In other cases, known structures, materials, or operations are not shown or described in detail to avoid making various aspects of the embodiments obscure. Reference to "an embodiment" or "one embodiment" within the framework of this description means that a particular configuration, structure, or feature described in connection with the embodiment is included in at least one embodiment. Thus, phrases such as "in an embodiment" or "in one embodiment," which may appear at different places in this description, do not necessarily refer to the same embodiment. Furthermore, particular conformations, structures or features may be suitably combined in one or more embodiments and/or associated with the embodiments in a manner other than as illustrated herein, so that for example a feature exemplified herein in relation to a figure it can be applied to one or more embodiments exemplified in a different figure.

The references shown here are for convenience only and therefore do not limit the extent of protection or the scope of the embodiments.

It should be noted that in the continuation of the present description only the elements useful for understanding the invention are described, taking for granted - for example - that the motor-vehicle wheel suspensions, which include the components illustrated in the accompanying drawings, comprise all the elements whose operation is known per se.

In the attached drawings, references 1, 2 indicate two suspension components mutually pivotally connected by means of a connection unit 3.

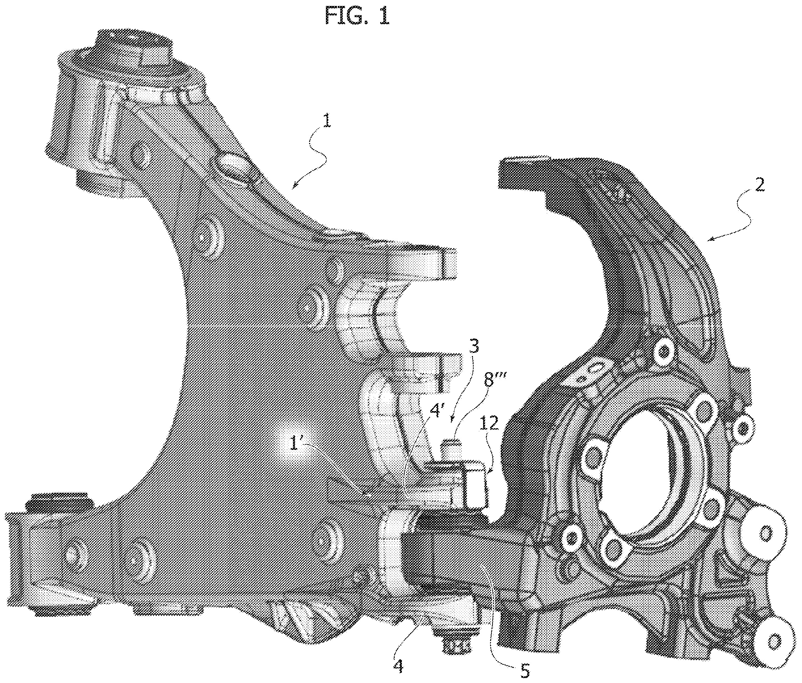

According to the example illustrated in figure 1, the two suspension components 1, 2 are an oscillating arm pivotally connected to a wheel knuckle 2. The construction details relating to these components are not described as they are generally known to those skilled in the art. However, it should be noted that the present invention is equally applicable to other types of suspension components, such as oscillating rods and suspension frames, for example.

For simplicity of explanation, hereinafter, the oscillating arm and the wheel knuckle are indicated respectively as the first suspension component 1 and second suspension component 2.

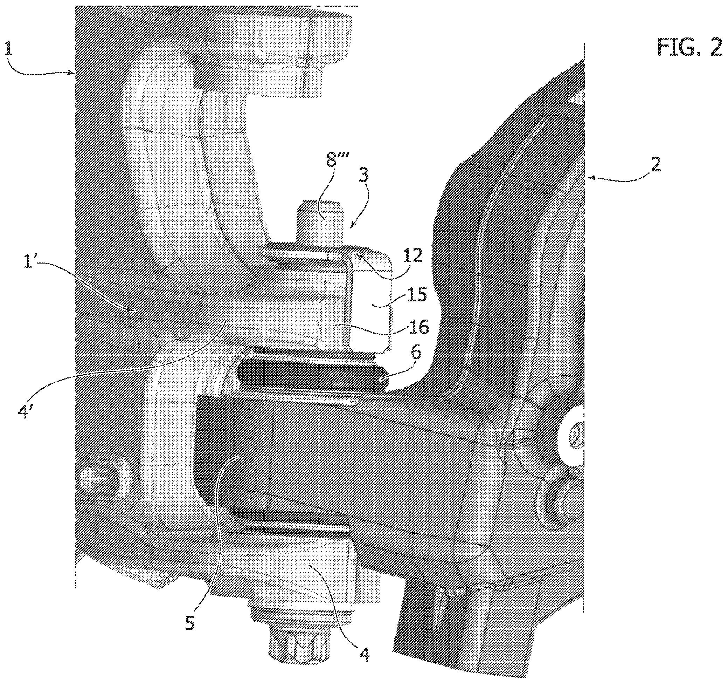

With reference to figures 1, 2, the first suspension component 1 comprises at least one fork-shaped end portion 1' comprising two spaced and parallel tines 4, 4', which are connected to an end portion 5 of the second suspension component 2. This end portion 5 is interposed between the two tines 4, 4' and connected to these through the connection unit 3, described in detail below.

The end portion 3 of the second suspension component 2 comprises an element 6 on which a through hole is obtained to be engaged by the connection unit 3. In one or more embodiments, the element 6 is a bushing made of elastomeric material defining an articulation axis around which the second component 2 is mounted pivotally with respect to the two tines 4, 4' of the fork-shaped portion 1'. In the illustrated embodiment, the articulation axis is substantially transverse to the main axes of the parallel tines 4, 4'.

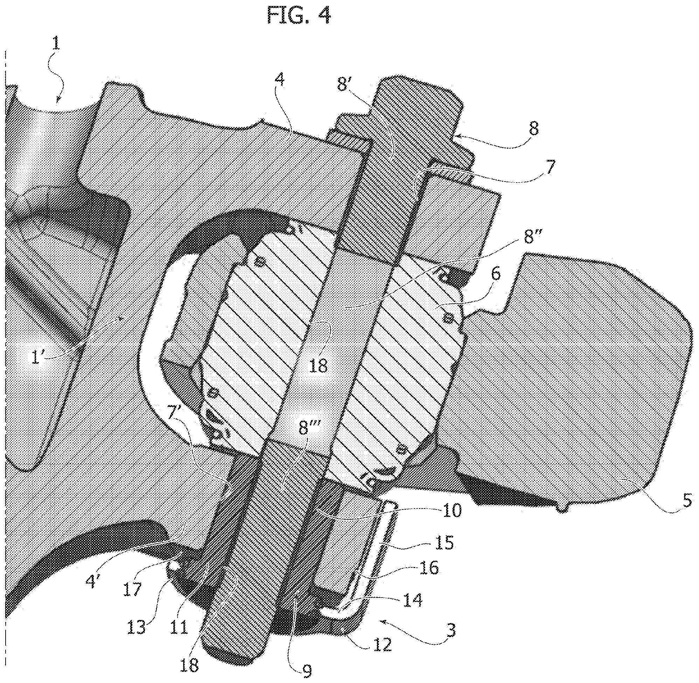

The connection unit 3 comprises a connection screw 8 arranged to connect the fork-shaped portion 1' with the end portion 5 of the second suspension component 2. To this purpose, each tine 4, 4' has a respective hole 7, 7' respectively engaged with a head portion 8' and an end portion 8'" of the connection screw 8. With reference to the sectional view of figure 4 which illustrates the final assembled configuration, the connection screw 8 comprises a head portion 8' inserted and fixed through a first hole 7 obtained on one of the two tines 4, 4', a central portion 8" inserted and fixed within the through hole of the elastic element 6, and an end portion 8" inserted and fixed within a second hole 7' obtained on the other of said two tines 4, 4'.

According to an essential feature of the present invention, the connection unit 3 further comprises a spacer member 9 engaged by interference within said second hole 7', intended to receive the end portion 8'" of the connection screw 8. More specifically, the spacer member 9 is a bushing which has a threaded through hole 18 for mutual engagement with the connection screw 8. The bushing has a cylindrical main portion 10 engaged by interference within said second hole 7', and a head portion 11.

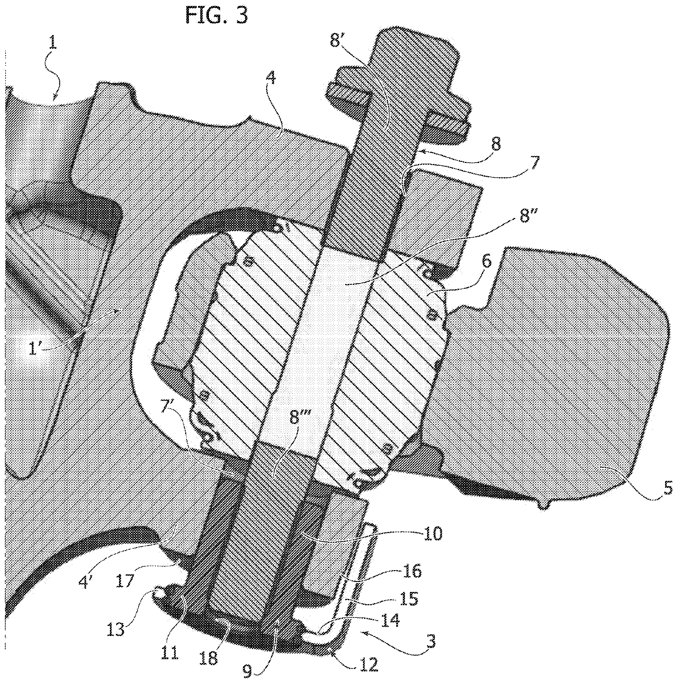

Figure 3 is an enlarged-scale cross-sectional view illustrating the connection zone of the two suspension components 1, 2 and the connection unit 3, in an assembly step preliminary to the final assembled configuration. It should be noted that the bushing has only a part of the cylindrical main portion 10 engaged within said second hole 7' of the tine 4', since during fastening of the connection screw 8, the latter forces the bushing which then slides axially within the hole 7' until final tightening determined by the achievement of the desired tightening torque for the connection unit (figure 4).

Therefore, the fork-shaped portion 1' tends not to deform due to the pre-stressing resulting from the tightening of the components, and in particular of the tines 4,4', which tend to remain elastically in the initial rest position. In this regard, one of the functions of the bushing-shaped spacer member 9 is just that of preserving the fork-shaped portion 1' from states of residual stress which could affect the reliability of the component 1 during the life cycle of the motor-vehicle.

In one or more embodiments, the fork-shaped portion 1' is made of aluminium, while the bushing-shaped spacer member 9 is preferably made of steel. In other embodiments, the fork-shaped portion 1' is made of other materials with low elongation and high stiffness.

As previously indicated, during fastening of the connection screw 8, the bushing-shaped spacer member 9 slides axially within the second hole 7', preserving the first suspension component 1 with fork-shaped portion 1' from harmful residual stresses.

According to a further feature of the invention, the connection unit 3 further comprises an anti-rotation flange 12 integrated in one piece with the spacer member 9. The anti-rotation flange 12 is configured to prevent rotation of the member spacer 9 during fastening of the connection screw 8. In fact, without the aid of the flange 12, by screwing the screw 8 into the bushing-shaped spacer member 9, the latter would rotate around its own axis preventing the tightening of the components. The anti-rotation flange 12 integrated with the bushing spacer member 9 therefore makes it possible to avoid the use of a classic nut screw to fix the connection screw 8, and consequent reaction equipment (socket wrench/screwdriver) to "block" the rotation of the nut screw during tightening.

As illustrated in the accompanying drawings, the anti-rotation flange 12 comprises an annular portion 13 rigidly connected along the entire peripheral edge of the head portion 11 of the bushing-shaped spacer member 9, and an L-shaped anti-rotation portion. The latter comprises a first side 14 connected to the annular portion 13 parallel to the outer side surface 17 of the tine 4', and a second side 15 perpendicular to the first side 14, adjacent to a front surface 16 of the tine 4' orthogonal to the outer side surface 17. As illustrated in figures 3, 4, the front surface 16 of the tine 4' is not perfectly smooth, but rather has at least a slightly protruding part for coming into contact with the inner surface of the second side 15 of the L-shaped anti-rotation portion. Consequently, during fastening of the connection screw 8, it is just the interference between the front surface 16 of the tine 4' and the L-shaped anti-rotation portion which prevents the rotation of the spacer member 9.

Thanks to the features indicated above, another feature of the bushing-shaped spacer member 9 is therefore that of not requiring additional tools during fastening, capable of preventing the spacer member 9 from rotating around its own axis during fastening of the connection screw 8.

In the light of the previous description, a single component - defined by the bushing-shaped spacer member 9 having the anti-rotation flange 12 integrated with it - allows multiple functions to be performed, without the aid of additional pieces or equipment, in particular:
- anti-rotation of the bushing within its seat;
- performing the task of a classic nut screw;
- preventing the tines 4, 4' from accumulating potentially harmful residual stresses;
- significantly reducing the "packaging" necessary for the connection/tightening function.

Of course, without prejudice to the principle of the invention, the details of construction and the embodiments may vary widely with respect to what has been described and illustrated purely by way of example, without thereby departing from the scope of the present invention.

## Claims

1. Motor-vehicle suspension comprising two suspension components (1, 2) mutually pivotally connected by means of a connection unit (3), wherein one of said two components (1, 2) has a fork-shaped portion (1') comprising two parallel tines (4, 4'), and the other of said two components (1, 2) has an end portion (5) interposed between the two tines (4, 4') and connected to the tines (4, 4') through said connection unit (3), wherein said end portion (5) interposed between the two tines (4, 4') comprises an element (6) having a through hole, wherein said connection unit (3) comprises a connection screw (8) having a head portion (8') inserted and fixed through a first hole (7) obtained on one of the two tines (4, 4'), a central portion (8") inserted and fixed within the through hole of the element (6), and an end portion (8'") inserted and fixed within a second hole (7') obtained on the other of said two tines (4, 4'),
said motor-vehicle suspension (1) being **characterized in that**:
- said connection unit (3) comprises a bushing-shaped spacer member (9) engaged by interference within said second hole (7'), wherein said spacer member (9) comprises a threaded through hole (18) receiving said end portion (8") of the connection screw (8),
- said connection unit (3) further comprises an anti-rotation flange (12) configured to prevent rotation of said spacer member (9) around its own axis, during fastening of the connection screw (8).

2. Motor-vehicle suspension according to claim 1, **characterized in that** the bushing-shaped spacer member (9) comprises a cylindrical main portion (10) engaged by interference within the second hole (7').

3. Motor-vehicle suspension according to claim 2, **characterized in that** the anti-rotation flange (12) is integrated in one piece with the bushing-shaped spacer member (9).

4. Motor-vehicle suspension according to claim 2 or 3, **characterized in that** the anti-rotation flange (12) comprises an annular portion (13) rigidly connected along the peripheral edge of the head portion (11) of the bushing-shaped spacer member (9), and an L-shaped anti-rotation portion.

5. Motor-vehicle suspension according to claim 4, **characterized in that** said L-shaped anti-rotation portion comprises a first side (14) connected to the annular portion (13) parallel to the outer side surface (17) of the tine (4'), and a second side (15) perpendicular to the first side (14), adjacent to a front surface (16) of the tine (4') which extends orthogonally with respect to the outer side surface (17).

6. Motor-vehicle suspension according to claim 5, **characterized in that** the front surface (16) of the tine (4') has at least one protruding part for coming into contact with the inner surface of the second side (15) of the L-shaped anti-rotation portion.

7. Motor-vehicle suspension according to any one of the previous claims, **characterized in that** said two suspension components (1, 2) are a suspension oscillating arm and a wheel knuckle.

8. Motor-vehicle suspension according to any one of the previous claims, **characterized in that** said fork-shaped portion (1') is made of aluminium, and the bushing-shaped spacer member (9) is made of steel.

9. Motor-vehicle suspension according to any one of the previous claims, **characterized in that** said element (6) is a bushing made of elastomeric material defining an articulation axis.

## Patentansprüche

1. Fahrzeugaufhängung, umfassend zwei Aufhängungskomponenten (1, 2), die mittels einer Verbindungseinheit (3) gegeneinander schwenkbar verbunden sind, wobei eine der beiden Komponenten (1, 2) einen gabelförmigen Abschnitt (1') aufweist, der zwei parallele Schenkel (4, 4') umfasst, und die andere der beiden Komponenten (1, 2) einen Endabschnitt (5) aufweist, der zwischen den beiden Schenkeln (4, 4') angeordnet und über die Verbindungseinheit (3) mit den Schenkeln (4, 4') verbunden ist, wobei der zwischen den beiden Schenkeln (4, 4') angeordnete Endabschnitt (5) ein Element (6) mit einer Durchgangsbohrung umfasst, wobei die Verbindungseinheit (3) eine Verbindungsschraube (8) umfasst, die einen Kopfabschnitt (8') aufweist, der durch eine erste Bohrung (7), die an einem der beiden Schenkel (4, 4') ausgebildet ist, eingeführt und fixiert ist, einen Mittelabschnitt (8"), der innerhalb der Durchgangsbohrung des Elements (6) eingeführt und fixiert ist, und einen Endabschnitt (8‴), der innerhalb einer zweiten Bohrung (7'), die an dem anderen der beiden Schenkel (4, 4') ausgebildet ist, eingeführt und fixiert ist,
wobei die Fahrzeugaufhängung (1) **dadurch gekennzeichnet ist, dass**:
- die Verbindungseinheit (3) ein buchsenförmiges Abstandshalter-Bauteil (9) umfasst, das durch Presspassung in der zweiten Bohrung (7') aufgenommen ist, wobei das Abstandshalter-Bauteil (9) ein durchgehendes Gewindeloch (18) aufweist, das den Endabschnitt (8"') der Verbindungsschraube (8) aufnimmt,
- die Verbindungseinheit (3) ferner eine Antidrehflansch (12) umfasst, die dazu ausgelegt ist, eine Drehung des Abstandshalter-Bauteils (9) um seine eigene Achse während des Anziehens der Verbindungsschraube (8) zu verhindern.

2. Fahrzeugaufhängung nach Anspruch 1, **dadurch gekennzeichnet, dass** das buchsenförmige Abstandshalter-Bauteil (9) einen zylindrischen Hauptabschnitt (10) umfasst, der durch Presspassung in der zweiten Bohrung (7') aufgenommen ist.

3. Fahrzeugaufhängung nach Anspruch 2, **dadurch gekennzeichnet, dass** die Antidrehflansch (12) einstückig mit dem buchsenförmigen Abstandshalter-Bauteil (9) ausgebildet ist.

4. Fahrzeugaufhängung nach Anspruch 2 oder 3, **dadurch gekennzeichnet, dass** die Antidrehflansch (12) einen ringförmigen Abschnitt (13), der entlang der Umfangskante des Kopfabschnitts (11) des buchsenförmigen Abstandshalter-Bauteils (9) starr verbunden ist, und einen L-förmigen Antidrehabschnitt umfasst.

5. Fahrzeugaufhängung nach Anspruch 4, **dadurch gekennzeichnet, dass** der L-förmige Antidrehabschnitt eine erste Seite (14), die mit dem ringförmigen Abschnitt (13) verbunden und parallel zur äußeren Seitenfläche (17) des Schenkels (4') verläuft, und eine zweite Seite (15), die senkrecht zur ersten Seite (14) verläuft und an einer Stirnfläche (16) des Schenkels (4') angrenzt, die sich orthogonal zur äußeren Seitenfläche (17) erstreckt, umfasst.

6. Fahrzeugaufhängung nach Anspruch 5, **dadurch gekennzeichnet, dass** die Stirnfläche (16) des Schenkels (4') mindestens einen vorstehenden Teil aufweist, um mit der Innenfläche der zweiten Seite (15) des L-förmigen Antidrehabschnitts in Kontakt zu kommen.

7. Fahrzeugaufhängung nach einem der vorhergehenden Ansprüche, **dadurch gekennzeichnet, dass** die beiden Aufhängungskomponenten (1, 2) ein Aufhängungspendelarm und ein Radträger sind.

8. Fahrzeugaufhängung nach einem der vorhergehenden Ansprüche, **dadurch gekennzeichnet, dass** der gabelförmige Abschnitt (1') aus Aluminium gefertigt ist und das buchsenförmige Abstandshalter-Bauteil (9) aus Stahl gefertigt ist.

9. Fahrzeugaufhängung nach einem der vorhergehenden Ansprüche, **dadurch gekennzeichnet, dass** das Element (6) eine Buchse aus elastomerem Material ist, die eine Gelenkachse definiert.

## Revendications

1. Suspension de véhicule automobile comprenant deux composants de suspension (1, 2) reliés mutuellement de manière pivotante au moyen d'une unité de connexion (3), dans laquelle l'un desdits deux composants (1, 2) présente une partie en forme de fourche (1') comprenant deux branches parallèles (4, 4'), et l'autre desdits deux composants (1, 2) présente une partie d'extrémité (5) interposée entre les deux branches (4, 4') et reliée aux branches (4, 4') par ladite unité de connexion (3), dans laquelle ladite partie d'extrémité (5) interposée entre les deux branches (4, 4') comprend un élément (6) ayant un trou traversant, dans laquelle ladite unité de connexion (3) comprend une vis de connexion (8) ayant une partie de tête (8') insérée et fixée à travers un premier trou (7) réalisé sur l'une des deux branches (4, 4'), une partie centrale (8") insérée et fixée à l'intérieur du trou traversant de l'élément (6), et une partie d'extrémité (8"') insérée et fixée à l'intérieur d'un second trou (7') réalisé sur l'autre desdites deux branches (4, 4'),
ladite suspension de véhicule automobile (1) étant **caractérisée en ce que** :
- ladite unité de connexion (3) comprend un élément d'espacement en forme de douille (9) engagé par interférence à l'intérieur dudit second trou (7'), dans lequel ledit élément d'espacement (9) comprend un trou traversant fileté (18) recevant ladite partie d'extrémité (8"') de la vis de connexion (8),
- ladite unité de connexion (3) comprend en outre une bride anti-rotation (12) configurée pour empêcher la rotation dudit élément d'espacement (9) autour de son propre axe, lors du serrage de la vis de connexion (8).

2. Suspension de véhicule automobile selon la revendication 1, **caractérisée en ce que** l'élément d'espacement en forme de douille (9) comprend une partie principale cylindrique (10) engagée par interférence à l'intérieur du second trou (7').

3. Suspension de véhicule automobile selon la revendication 2, **caractérisée en ce que** la bride anti-rotation (12) est intégrée d'une seule pièce avec l'élément d'espacement en forme de douille (9).

4. Suspension de véhicule automobile selon la revendication 2 ou 3, **caractérisée en ce que** la bride anti-rotation (12) comprend une partie annulaire (13) rigidement connectée le long du bord périphérique de la partie de tête (11) de l'élément d'espacement en forme de douille (9), et une partie anti-rotation en forme de L.

5. Suspension de véhicule automobile selon la revendication 4, **caractérisée en ce que** ladite partie anti-rotation en forme de L comprend un premier côté (14) connecté à la partie annulaire (13) parallèlement à la surface latérale externe (17) de la branche (4'), et un second côté (15) perpendiculaire au premier côté (14), adjacent à une surface frontale (16) de la branche (4') qui s'étend orthogonalement par rapport à la surface latérale externe (17).

6. Suspension de véhicule automobile selon la revendication 5, **caractérisée en ce que** la surface frontale (16) de la branche (4') présente au moins une partie saillante destinée à entrer en contact avec la surface interne du second côté (15) de la partie anti-rotation en forme de L.

7. Suspension de véhicule automobile selon l'une quelconque des revendications précédentes, **caractérisée en ce que** lesdits deux composants de suspension (1, 2) sont un bras oscillant de suspension et un pivot de roue.

8. Suspension de véhicule automobile selon l'une quelconque des revendications précédentes, **caractérisée en ce que** ladite partie en forme de fourche (1') est réalisée en aluminium, et l'élément d'espacement en forme de douille (9) est réalisé en acier.

9. Suspension de véhicule automobile selon l'une quelconque des revendications précédentes, **caractérisée en ce que** ledit élément (6) est une douille en matériau élastomère définissant un axe d'articulation.
